# EUROPEAN PATENT SPECIFICATION

(11) **EP 4 471 942 B1**
(45) Date of publication and mention of the grant of the patent: **27.05.2026**
(21) Application number: 23907579.9
(22) Date of filing: 14.12.2023
(51) Int. Cl.: H01M 10/6556, H01M 10/6568, H01M 50/204, H01M 10/613, H01M 50/30, H01M 10/625, H01M 10/6567

(54) **BATTERY PACK**
BATTERIEPACK
BATTERIE

(30) Priority: 20.12.2022 KR 20220179155; 06.03.2023 KR 20230029147
(43) Date of publication of application: 04.12.2024
(73) Proprietor: LG Energy Solution, Ltd., Seoul 07335 (KR)
(72) Inventor: HUR, Nam Hoon, Daejeon 34122 (KR); LEE, Hyoung Suk, Daejeon 34122 (KR); SHIN, Ju Hwan, Daejeon 34122 (KR)
(74) Representative: Plasseraud IP
(86) International application number: PCT/KR2023/020603
(87) International publication number: WO 2024/136293

(56) References cited:
- CN-A- 110 114 933
- CN-A- 112 055 898
- KR-A- 20190 131 415
- KR-A- 20190 131 415
- KR-A- 20200 111 353
- KR-A- 20210 133 787
- KR-A- 20210 133 787
- KR-A- 20210 133 788
- KR-A- 20210 133 788
- KR-A- 20220 004 375

## Description

### [Technical Field]

The present invention relates to a battery pack. The present application claims the benefit of priority based on Korean Patent Application No. 10-2022-0179155, filed on December 20, 2022 and Korean Patent Application No. 10-2023-0029147, filed on March 6, 2023.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

As secondary batteries are used for mobility, the demand for the safety of secondary batteries is increasing. A driver's life may be in danger when an accident such as fire occurs in a secondary battery used for mobility and thus research on technology for enhancing the safety of secondary batteries is indispensable. In particular, cooling technology for maintaining temperature of a secondary battery in operation is directly related to the lifespan and performance of the secondary battery as well as the stability of the secondary battery, and thus, many studies are being conducted on cooling technology of secondary batteries. Document KR20190131415A discloses such a battery with a cooling system.

### [Disclosure]

### [Technical Problem]

The present invention is directed to providing a battery pack with improved reliability and safety.

### [Technical Solution]

To address the above-described problem, example embodiments of the present invention provide a battery pack. The battery pack includes a housing including a plate part and first and second side walls coupled to the plate part, a plurality of battery assemblies on the housing, and a lower supply pipe assembly on a first side of the housing, in which the plate part includes a plurality of lower cooling channels extending in a first direction, the first side wall includes a first lower recovery channel, the second side wall includes a second lower recovery channel, and the lower supply pipe assembly is connected to the plurality of lower cooling channels.

The battery pack may further include lower supply ports provided on the first side of the housing and connected to the lower supply pipe assembly.

The battery pack may further include lower discharge ports provided on the first side of the housing and connected to the first and second lower recovery channels.

Each of the first and second side walls may further include an exhaust path configured to exhaust a gas discharged from the battery assemblies.

The battery pack may further include a lower recovery pipe assembly provided on a second side of the housing opposite to the first side, and configured to connect the plurality of lower cooling channels to the first and second lower recovery channels.

The lower supply pipe assembly and the lower recovery pipe assembly may connect the plurality of lower cooling channels in parallel.

The first side wall may further include a first upper recovery channel on the first lower recovery channel.

The second side wall may further include a second upper recovery channel on the second lower recovery channel.

The battery pack may further include an upper cooling device provided on the battery assemblies and including a plurality of upper cooling channels.

The battery pack may further include an upper supply pipe assembly provided on the first side of the housing and connected to the plurality of upper cooling channels.

The upper supply pipe assembly may connect the plurality of upper cooling channels in parallel.

The battery pack may further include upper supply ports provided on the first side of the housing and connected to the upper supply pipe assembly.

The battery pack may further include upper discharge ports provided on the first side of the housing and connected to the first and second upper recovery channels.

The battery pack may further include an upper recovery channel configured to connect the plurality of upper cooling channels to the first and second upper recovery channels.

The upper recovery pipe assembly may be on the second side of the housing.

### [Advantageous Effects]

A battery pack according to example embodiments of the present invention may include a recovery channel of a cooling fluid that is buried in a side wall of the battery pack, and thus, a side of the battery pack can be cooled during the recovery of the cooling fluid and a cooling system can be implemented in a relatively narrow space. In addition, each of input and output ports of a cooling port is placed on one side of the battery pack and thus flow path design of the cooling system can be simplified.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a plan view for describing a battery pack according to example embodiments.
FIG. 2 is a plan view for describing a battery pack according to example embodiments.
FIG. 3 is a cross-sectional view taken along line 1A-1A' of FIG. 2.
FIG. 4 is a perspective view including a cross section taken along line 1B-1B' of FIG. 2.
FIG. 5 is a perspective view including a cross section taken along line 1C-1C' of FIG. 2.
FIG. 6 is a plan view for describing a battery pack according to example embodiments.
FIG. 7 is a perspective view including a cross section taken along line 6B-6B' of FIG. 6.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

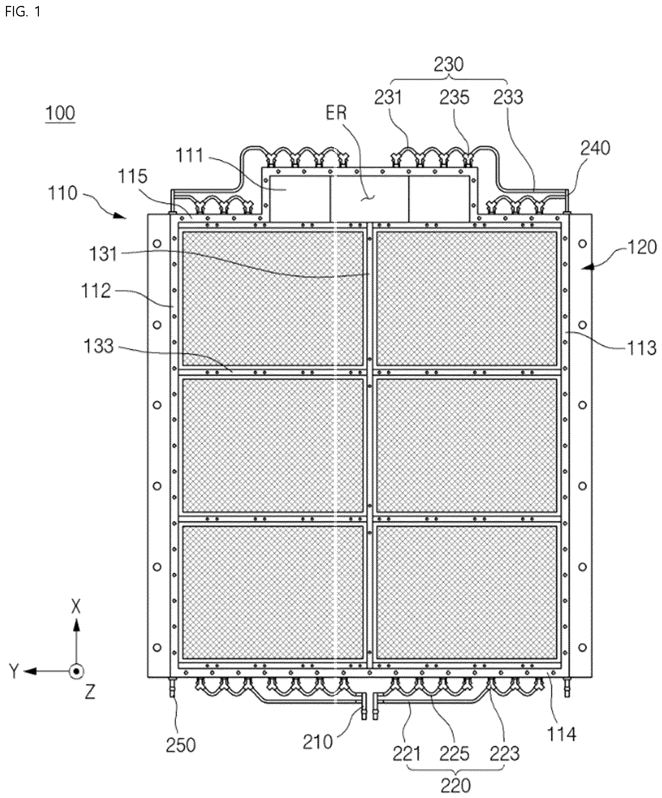

FIG. 1 is a plan view for describing a battery pack according to example embodiments.

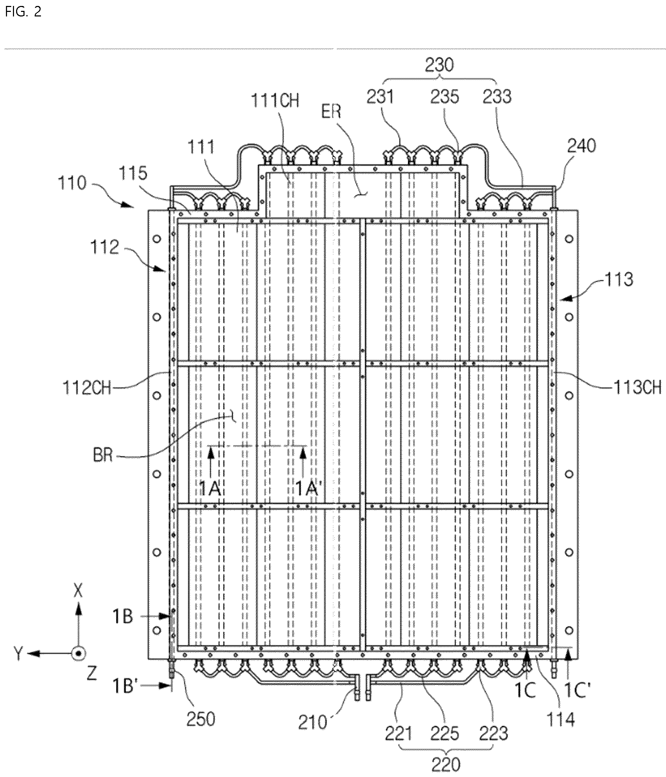

FIG. 2 is a plan view for describing a battery pack according to example embodiments. In FIG. 2, a plurality of cooling channels 111CH and first and second recovery channels 112CH and 113CH that are buried in a housing 110 are denoted by dashed lines.

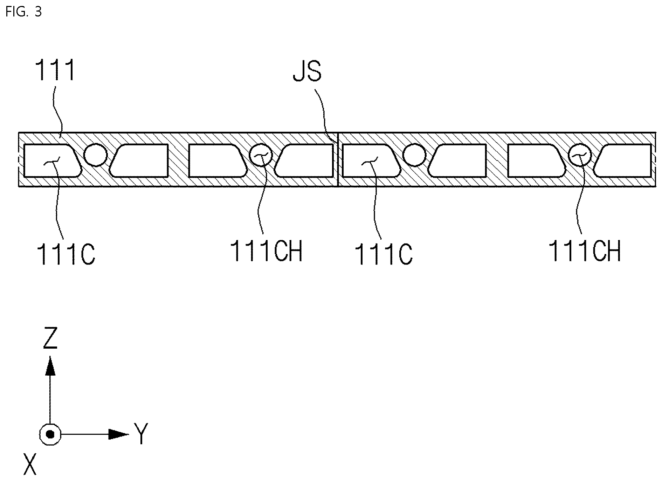

FIG. 3 is a cross-sectional view taken along line 1A-1A' of FIG. 2.

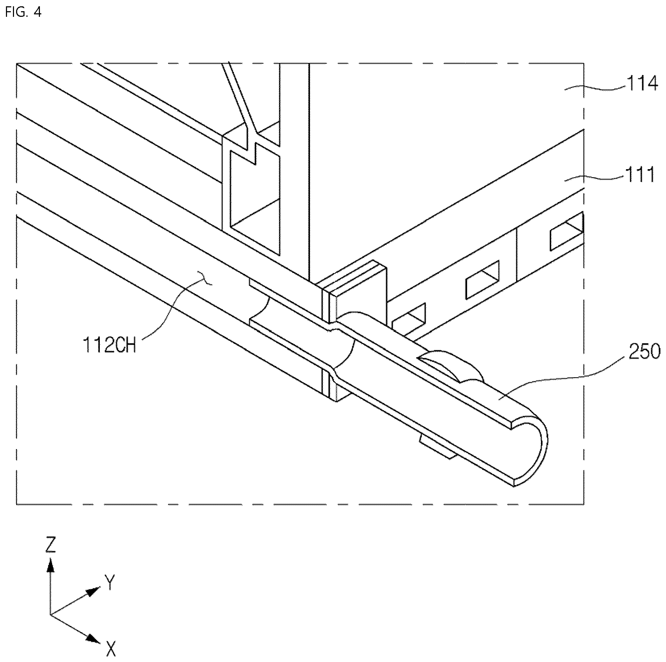

FIG. 4 is a perspective view including a cross section taken along line 1B-1B' of FIG. 2.

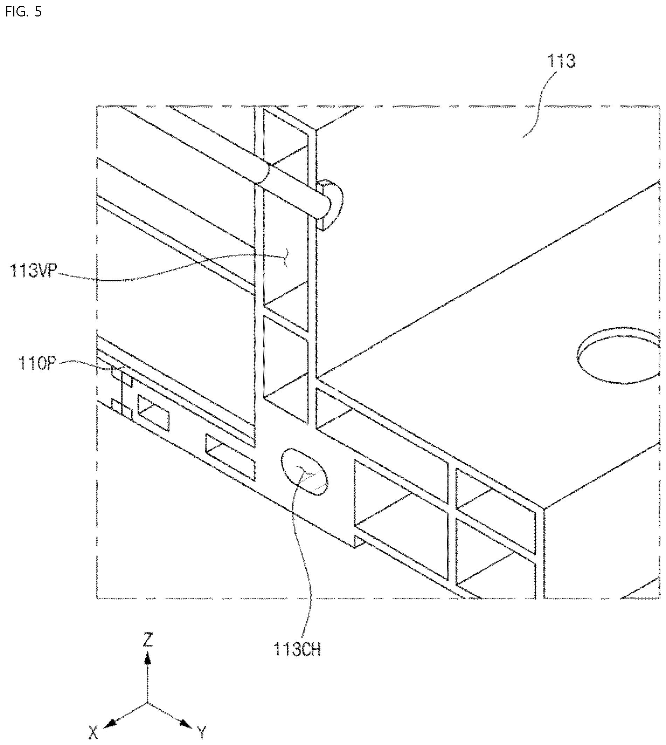

FIG. 5 is a perspective view including a cross section taken along line 1C-1C' of FIG. 2.

Referring to FIGS. 1 to 5, a battery pack 100 may include the housing 110, a plurality of battery assemblies 120, a center beam 131, a plurality of cross-beams 133, injection ports 210, a supply pipe assembly 220, a recovery pipe assembly 230, recovery ports 240, and discharge ports 250.The battery pack 100 is a final form of a battery system mounted on a mobility or the like.

The housing 110 may include a plate part 111, a first side wall 112, a second side wall 113, a third side wall 114, and a fourth side wall 115.Two directions substantially parallel to the plate part 111 are defined as an X-axis direction and a Y-axis direction, and a direction substantially perpendicular to the plate part 111 is defined as a Z-axis direction. The X-axis direction, the Y-axis direction, and the Z-axis direction may be substantially perpendicular to one another. Unless otherwise mentioned, the definition of directions will apply to the following drawings.

A battery region BR and an electronic component region ER may be defined on the plate part 111.The plurality of battery assemblies 120 may be on the battery region BR. Electronic components may be on the electronic component region ER.

According to example embodiments, the plate part 111 may include the plurality of cooling channels 111CH and a plurality of cavities 111C.As a non-limiting example, the plate part 111 may be provided through an extrusion process. According to example embodiments, the plate part 111 may be provided by welding (e.g., friction-stir welding) a plurality of plates and thus include bonding surfaces JS of the plurality of plates.

According to example embodiments, the plurality of cooling channels 111CH may be configured to provide a path in which a cooling fluid flows. The cooling fluid is a fluid, such as water, air or a refrigerant, for cooling the plurality of battery assemblies 120.The plurality of cooling channels 111CH may be spaced apart from each other in the Y-axis direction. The plurality of cooling channels 111CH may be arranged in the Y-axis direction. The plurality of cooling channels 111CH may be interposed between the plurality of cavities 111C. Each of the plurality of cooling channels 111CH may be referred to as a lower cooling channel.

The plurality of cavities 111C are empty spaces formed in the plate part 111.By forming the plurality of cavities 111C, the mass of the plate part 111 may be reduced, thus improving thus energy density of the battery pack 100.The plurality of cavities 111C may be spaced apart from each other in the Y-axis direction.

The plurality of battery assemblies 120 may be provided on the plate part 111 of the housing 110.The plate part 111 may support the plurality of battery assemblies 120.The plate part 111 may include an upper surface and a lower surface that are substantially parallel to each other. The upper surface of the plate part 111 may face the plurality of battery assemblies 120.The lower surface of the plate part 111 is opposite to the upper surface of the plate part 111.

First to fourth side walls 112, 113, 114, and 115 may horizontally surround the plurality of battery assemblies 120.The first to fourth side walls 112, 113, 114, and 115 may protect the plurality of battery assemblies 120.The first to fourth side walls 112, 113, 114 and 115 may be fixed to each other by a method such as friction stir welding or spot welding.

The first and second side walls 112 and 113 may be substantially perpendicular to the Y-axis direction. The third side wall 114 may be substantially perpendicular to the X-axis direction. The fourth side wall 115 may include portions substantially perpendicular to the X-axis direction and portions substantially perpendicular to the Y-axis direction. The first and second side walls 112 and 113 may cover sides of the plate part 111.The third and fourth side walls 114 and 115 may be on the plate part 111.

According to example embodiments, the first to fourth side walls 112, 113, 114 and 115 may be provided by an extrusion process. According to example embodiments, the first to fourth side walls 112, 113, 114, and 115 may each include an inner empty space similar to the second side wall 113 of FIG. 5.Accordingly, the first to fourth side walls 112, 113, 114, and 115 may decrease in weight and the energy density of the battery pack 100 may improve.

According to example embodiments, some of the empty spaces of the first to fourth side walls 112, 113, 114, and 115 may be a venting path 113VP of a gas. The first and second side walls 112 and 113 may be provided by the extrusion process. The empty space of each of the first and second side walls 112 and 113 may extend in the X-axis direction.

According to example embodiments, the first side wall 112 may include a first recovery channel 112CH in a part of the empty space of the first side wall 112.The first recovery channel 112CH may be buried in the first side wall 112.According to example embodiments, the second side wall 113 may include a second recovery channel 113CH in a part of the empty spaces of the second side wall 113.The second recovery channel 113CH may be buried in the second side wall 113. The first recovery channel 112CH may be referred to as a first lower recovery channel, and the second recovery channel 113CH may be referred to as a second lower recovery channel.

The battery assemblies 120 may include a plurality of battery cells. According to some embodiments, the battery assemblies 120 may include a module frame surrounding the plurality of battery cells. According to some embodiments, the battery assembly 120 may not include a module frame.

A battery cell is a basic unit of a lithium ion battery, i.e., a secondary battery. The battery cell includes an electrode assembly, an electrolyte, and a case. Battery cells are classified into a lithium ion battery, a lithium ion polymer battery, a lithium polymer battery, etc. according to a configuration of an electrode assembly and an electrolyte. A market share of lithium ion polymer batteries in the field of secondary battery is increasing due to a low possibility of leakage of an electrolyte and easiness in manufacturing.

Battery cells are classified into cylindrical batteries in which an electrode assembly is built in a cylindrical metal can, prismatic batteries in which an electrode assembly is built in a prismatic metal can, and pouch-type batteries in which an electrode assembly is built in a pouch case of aluminum laminate sheet, according to a shape of a battery case.

An electrode assembly included in a battery case includes a positive electrode, a negative electrode, and a separator interposed between the positive electrode and the negative electrode. The electrode assembly may be classified as a jelly-roll type electrode assembly or a stack type electrode assembly according to a form of assembly. The jelly roll type electrode assembly is manufactured by winding a positive electrode, a negative electrode, and a separator interposed therebetween. The stack type electrode assembly includes a plurality of positive electrodes, a plurality of negative electrodes, and a plurality of separators interposed therebetween that are stacked sequentially.

The center beam 131 may isolate elements on the housing 110 from each other. Accordingly, the center beam 131 may prevent an undesired short circuit from occurring between the plurality of battery assemblies 120 while protecting the plurality of battery assemblies 120.

The center beam 131 may extend between the third side wall 114 and one of the plurality of cross-beams 133 (e.g., the cross-beam 133 furthest from the third side wall 114).The center beam 131 may extend in the X-axis direction. The center beam 131 may be in contact with the third side wall 114 and the plurality of cross-beams 133.The center beam 131 may isolate the plurality of battery assemblies 120 from each other. The center beam 131 may be interposed between the plurality of battery assemblies 120.

Each of the plurality of cross-beams 133 may extend between the first side wall 112 and the center beam 131 or between the second side wall 113 and the center beam 131.Each of the plurality of cross-beams 133 may be in contact with the first side wall 112 or the second side wall 113.Each of the plurality of cross-beams 133 may extend in the Y-axis direction. The plurality of cross-beams 133 may isolate the plurality of battery assemblies 120 from each other. The plurality of cross-beams 133 may be interposed between the plurality of battery assemblies 120.

An arrangement of the center beam 131, the plurality of cross-beams 133, and the plurality of battery assemblies 120 illustrated in FIG. 1 is a non-limiting example and thus should not be understood as limiting the technical idea of the present invention in any sense. A battery pack that includes various numbers and arrangements of a center beam, cross-beams, and battery assemblies will be easily derived by those of ordinary skill in the art according to the above description.

A cooling fluid may be supplied to the supply pipe assembly 220 through the injection ports 210. Each of the injection ports 210 may be referred to as a lower injection port. The injection ports 210 may be connected to a cooling fluid source (e.g., a cooling system of mobility). The injection ports 210 may provide a flow path of the cooling fluid.

The cooling fluid may be supplied to the plurality of cooling channels 111CH through the supply pipe assembly 220.The supply pipe assembly 220 may be referred to as a lower supply pipe assembly. The supply pipe assembly 220 may include a plurality of supply pipes 221, a plurality of connectors 223, and a plurality of connection pipes 225.

The plurality of supply pipes 221 may be connected to the injection ports 210.The plurality of supply pipes 221 may be connected in parallel with each other. The plurality of connectors 223 may be connected to the plurality of supply pipes 221 or the plurality of connection pipes 225.The plurality of connection pipes 225 may connect the plurality of connectors 223 to each other. Each of the plurality of connectors 223 may be connected to corresponding one among the plurality of cooling channels 111CH.Accordingly, the plurality of cooling channels 111CH may be connected in parallel according to the movement of the cooling fluid to alleviate a pressure drop according to the path of the cooling fluid. An additional pipe may be further provided between the plurality of connectors 223 and the plurality of cooling channels 111CH to connect the plurality of connectors 223 and the plurality of cooling channels 111CH.

The cooling fluid may cool the plurality of battery assemblies 120 while flowing along the plurality of cooling channels 111CH.The cooling fluid flowing along the plurality of cooling channels 111CH may be recovered through the recovery pipe assembly 230. The recovery pipe assembly 230 may also be referred to as a lower recovery pipe assembly. The cooling fluid recovered by the recovery pipe assembly 230 may flow to the recovery ports 240.Each of the recovery ports 240 may be referred to as a lower recovery port. The recovery pipe assembly 230 may include a plurality of recovery pipes 231, a plurality of connectors 233, and a plurality of connection pipes 235.

The plurality of recovery pipes 231 may be connected to the recovery ports 240.The plurality of recovery pipes 231 may be connected to each other in parallel. The plurality of connectors 233 may be connected to the plurality of recovery pipes 231 or the plurality of connection pipes 235.The plurality of connection pipes 235 may connect the plurality of connectors 233 to each other. Each of the plurality of connectors 233 may be connected to corresponding one among the plurality of cooling channels 111CH.An additional pipe may further be provided between the plurality of connectors 233 and the plurality of cooling channels 111CH to connect the plurality of connectors 233 and the plurality of cooling channels 111CH.

The cooling fluid may be discharged to a cooling fluid sink (e.g., a cooling system of mobility) through the recovery ports 240, the first and second recovery channels 112CH and 113CH, and the discharge ports 250.Each of the discharge ports 250 may be referred to as a lower discharge port. The cooling fluid may cool the plurality of battery assemblies 120 while flowing along the first and second recovery channels 112CH and 113CH.Accordingly, the number of surfaces of the plurality of battery assemblies 120 to be cooled increases, thus improving cooling performance of the battery pack 100.

According to example embodiments, the injection ports 210 and the discharge ports 250 may be on the same side of the housing 110.More specifically, the injection ports 210 and the discharge ports 250 may be on a side of the housing 110 on which the third side wall 114 is located. Because the injection ports 210 and the discharge ports 250 are on the same side of the housing 110, the flow path design of the cooling system for supplying the cooling fluid to the battery pack 100 may be simplified. A side of the housing 110 adjacent to the third side wall 114 is defined as a first side, and a side of the housing 110 adjacent to the fourth side wall is defined as a second side. The first side and the second side may be spaced apart from each other in the X-axis direction and be opposite to each other.

The battery pack 100 may further include a plurality of exhaust devices. The plurality of exhaust devices may be connected to the exhaust path 113VP.The exhaust path 113VP may be a path for discharging a gas and heat from the inside of the battery pack 100.

The plurality of exhaust devices may be configured to delay thermal propagation by discharging a high-temperature gas from the inside of the battery pack 100 to the outside when at least one of the plurality of battery assemblies 120 is in a thermal runaway state.

Here, the thermal runaway state of the plurality of battery assemblies 120 is a state in which a change of temperature of the plurality of battery assemblies 120 accelerates the change of temperature, i.e., an uncontrollable positive feedback. The temperature of the plurality of battery assemblies 120 that are in the thermal runaway state sharply increases, and a large amount of high-pressure gas and combustion debris are discharged.

The battery pack 100 may further include electronic components. The electronic components may be on the electronic component region ER. The electronic components may include an electronic device required to drive the battery pack 100.

The electronic components may include, for example, a battery management system (BMS).The BMS may be configured to monitor, balance, and control the battery pack 100.The monitoring of the battery pack 100 may include measuring voltages and currents of certain nodes inside the plurality of battery assemblies 120 and measuring temperatures at set positions in the battery pack 100.The battery pack 100 may include measuring instruments for measuring voltages, currents, and temperatures as described above.

The balancing of the battery pack 100 is an operation of reducing a deviation between the plurality of battery assemblies 120.The controlling of the battery pack 100 includes preventing overcharging, over-discharging, and overcurrent. Through monitoring, balancing, and controlling, the battery pack 100 may be operated under optimal conditions, thereby preventing the lifespan of each of the plurality of battery assemblies 120 from being shortened.

The electronic components may further include a cooling device, a power relay assembly (PRA), a safety plug, etc. The cooling device may include a cooling fan. The cooling fan may circulate air in the battery pack 100 to prevent overheating of each of the plurality of battery assemblies 120.The PRA may be configured to supply or cut off power from a high-voltage battery to an external load (e.g., a motor of a vehicle).The PRA may cut off power supply to an external load (e.g., a motor of a vehicle) to protect the plurality of battery assemblies 120 and an external load (e.g., a motor of a vehicle), when abnormal voltage such as voltage surges occurs.

The battery pack 100 may further include a plurality of bus bars configured to electrically connect the plurality of battery assemblies 120.The plurality of battery assemblies 120 may be connected in series by the plurality of bus bars. Accordingly, the battery pack 100 may be configured to output a high voltage to an external load (e.g., a motor of a vehicle).

The battery pack 100 may further include a lid plate coupled to the housing 110.The lid plate may cover the electrical components and the battery assemblies 120.

### (Second Embodiment)

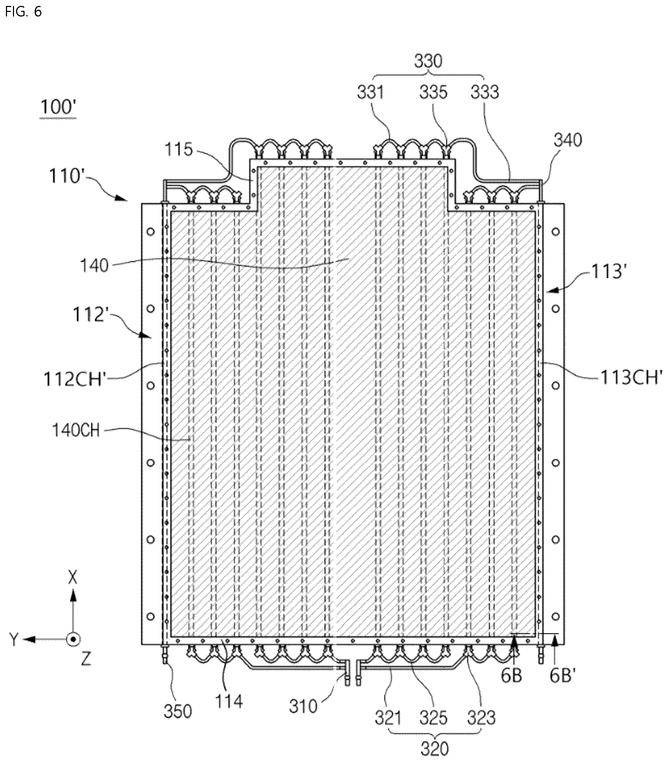

FIG. 6 is a plan view for describing a battery pack 100' according to example embodiments.

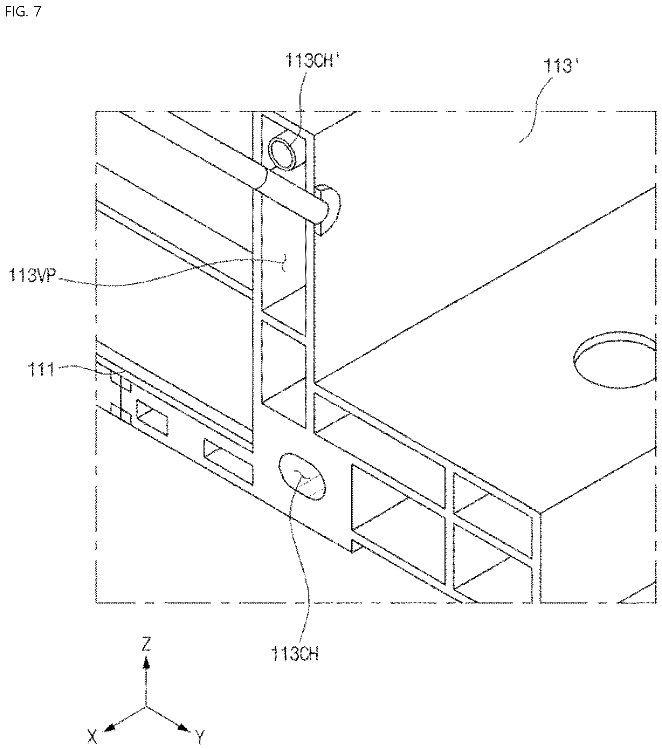

FIG. 7 is a perspective view including a cross section taken along line 6B-6B' of FIG. 6.

Referring to FIGS. 1, 6, and 7, the battery pack 100' is substantially the same as the battery pack 100, except that the housing 110 is replaced with a housing 110', and a cooling device 140, injection ports 310, a supply pipe assembly 320, a recovery pipe assembly 330, recovery ports 340, and discharge ports 350 are further provided. Accordingly, the battery pack 100' may include a plurality of battery assemblies 120, a center beam 131, a plurality of cross-beams 133, injection ports 210, a supply pipe assembly 220, a recovery pipe assembly 230, recovery ports 240, and discharge ports 250, and a redundant description thereof is omitted.

The housing 110' may include a plate part 111, a first side wall 112', a second side wall 113', a third side wall 114, and a fourth side wall 115.The plate part 111, the third side wall 114, and the fourth side wall 115 are substantially the same as those described above with reference to FIGS. 1 to 5.

The first side wall 112' is the same as the first side wall 112 (see FIG. 1) except that an additional first recovery channel 112CH' is included therein. The second side wall 113' is the same as the second side wall 113 (see FIG. 1) except that an additional second recovery channel 113CH' is included therein. The first and second recovery channels 112CH' and 113CH' may be in inner empty spaces of the first and second side walls 112' and 113'.The first recovery channel 112CH' may be referred to as a first upper recovery channel, and the second recovery channel 113CH' may be referred to as a second upper recovery channel.

The cooling device 140 may cover the plurality of battery assemblies 120 (see FIG. 1).The cooling device 140 may cool upper parts of the plurality of battery assemblies (120 (see FIG. 1), thus improving the cooling performance of the battery pack 100'.The cooling device 140 may be provided by, for example, the extrusion process. The cooling device 140 may include a plurality of cooling channels 140CH extending in the X-axis direction. The plurality of cooling channels 140CH may be referred to as upper cooling channels.

A cooling fluid may be supplied to the supply pipe assembly 320 through the injection ports 310.Each of the injection ports 310 may be referred to as an upper injection port. The injection ports 310 may be connected to a cooling fluid source (e.g., a cooling system of mobility). The injection ports 310 may provide a flow path of the cooling fluid.

The cooling fluid may be supplied to the plurality of cooling channels 140CH through the supply pipe assembly 320.The supply pipe assembly 220 may be referred to as an upper supply pipe assembly. The supply pipe assembly 320 may include a plurality of supply pipes 321, a plurality of connectors 323, and a plurality of connection pipes 325.

The plurality of supply pipes 321 may be connected to the injection ports 310.The plurality of supply pipes 321 may be connected to each other in parallel. The plurality of connectors 323 may be connected to the plurality of supply pipes 321 or the plurality of connection pipes 325.The plurality of connection pipes 325 may connect the plurality of connectors 323 to each other. Each of the plurality of connectors 323 may be connected to corresponding one among the plurality of cooling channels 140CH.Accordingly, the plurality of cooling channels 140CH may be connected in parallel according to the movement of the cooling fluid to alleviate a pressure drop according to the path of the cooling fluid. An additional pipe may be further provided between the plurality of connectors 323 and the plurality of cooling channels 140CH to connect the plurality of connectors 323 and the plurality of cooling channels 140CH.

The cooling fluid may cool the plurality of battery assemblies 120 while flowing along the plurality of cooling channels 140CH.The cooling fluid flowing along the plurality of cooling channels 140CH may be recovered through the recovery pipe assembly 330.The recovery pipe assembly 330 may also be referred to as an upper recovery pipe assembly. The cooling fluid recovered by the recovery pipe assembly 330 may flow to the recovery ports 340.Each of the recovery ports 340 may be referred to as an upper recovery port. The recovery pipe assembly 330 may include a plurality of recovery pipes 331, a plurality of connectors 333, and a plurality of connection pipes 335.

The plurality of recovery pipes 331 may be connected to the recovery ports 340.The plurality of recovery pipes 331 may be connected to each other in parallel. The plurality of connectors 333 may be connected to the plurality of recovery pipes 331 or the plurality of connection pipes 335.The plurality of connection pipes 335 may connect the plurality of connectors 333 to each other. Each of the plurality of connectors 333 may be connected to corresponding one among the plurality of cooling channels 140CH.An additional pipe may be further provided between the plurality of connectors 333 and the plurality of cooling channels 140CH to connect the plurality of connectors 333 and the plurality of cooling channels 140CH.

The cooling fluid may be discharged to the outside (e.g., a cooling system of mobility) through the recovery ports 340, the first and second recovery channels 112CH and 113CH, and the discharge ports 350. Each of the discharge ports 350 may be referred to as an upper discharge port. The cooling fluid may cool the plurality of battery assemblies 120 while flowing along the first and second recovery channels 112CH and 113CH.Accordingly, the number of surfaces of the plurality of battery assemblies 120 to be cooled increases, thus improving cooling performance of the battery pack 100'.

According to example embodiments, the injection ports 310 and the discharge ports 350 may be on the same side of the housing 110'.More specifically, the injection ports 310 and the discharge ports 350 may be on a side of the housing 110' on which the third side wall 114 is located. Because the injection ports 310 and the discharge ports 350 are on the same side of the housing 110', the flow path design of the cooling system for supplying the cooling fluid to the battery pack 100' may be simplified.

## Claims

1. A battery pack (100) comprising:
a housing (110) including a plate part (111) and first and second side walls (112, 113) coupled to the plate part (111);
a plurality of battery assemblies (120) on the housing (110); and
a lower supply pipe assembly (220) on a first side of the housing (100),
wherein the plate part (111) includes a plurality of lower cooling channels (111CH) extending in a first direction, the first side (112) wall includes a first lower recovery channel (112H), the second side wall (113) includes a second lower recovery channel (113CH), **characterized in that** the lower supply pipe assembly (220) is connected to the plurality of lower cooling channels (111CH).

2. The battery pack (100) of claim 1, further comprising lower supply ports (210) on the first side of the housing (110) and connected to the lower supply pipe assembly (220).

3. The battery pack (100) of claim 1, further comprising lower discharge ports (250) on the first side of the housing (110) and connected to the first and second lower recovery channels (112CH, 113CH).

4. The battery pack (100) of claim 1, wherein each of the first and second side walls (112, 113) further includes an exhaust path (113VP) configured to exhaust a gas discharged from the battery assemblies (120).

5. The battery pack (100) of claim 1, further comprising a lower recovery pipe assembly (230) on a second side of the housing (100) opposite to the first side, the lower recovery pipe assembly (230) configured to connect the plurality of lower cooling channels (111CH) to the first and second lower recovery channels (112CH, 113CH).

6. The battery pack (100) of claim 5, wherein the lower supply pipe assembly (220) and the lower recovery pipe assembly (230) connect the plurality of lower cooling channels (111CH) to one another in parallel.

7. The battery pack (100) of claim 1, wherein the first side wall (112) further includes a first upper recovery channel (112CH') overlying the first lower recovery channel (112CH), and the second side wall (113CH) further includes a second upper recovery channel (113CH') overlying the second lower recovery channel (113CH).

8. The battery pack (100) of claim 7, further comprising an upper cooling device (140) overlying the battery assemblies (120) and including a plurality of upper cooling channels (140CH).

9. The battery pack (100) of claim 8, further comprising an upper supply pipe assembly (320) on the first side of the housing (100) and connected to the plurality of upper cooling channels (140CH).

10. The battery pack (100) of claim 9, wherein the upper supply pipe assembly (320) connects the plurality of upper cooling channels (140CH) in parallel.

11. The battery pack (100) of claim 9, further comprising upper supply ports (310) on the first side of the housing (100) and connected to the upper supply pipe assembly (320).

12. The battery pack (100) of claim 9, further comprising upper discharge ports (350) on the first side of the housing (100) and connected to the first and second upper recovery channels (112CH', 113CH').

13. The battery pack (100) of claim 8, further comprising an upper recovery pipe assembly (330) configured to connect the plurality of upper cooling channels (140CH) to the first and second upper recovery channels (112CH', 113CH').

14. The battery pack (100) of claim 13, wherein the upper recovery pipe assembly (330) is on the second side of the housing (100).

## Patentansprüche

1. Batteriepack (100), umfassend:
ein Gehäuse (110), welches einen Plattenteil (111) und eine erste sowie eine zweite Seitenwand (112, 113) umfasst, welche mit dem Plattenteil (111) gekoppelt sind;
eine Mehrzahl von Batterieanordnungen (120) an dem Gehäuse (110); und
eine untere Zuführrohranordnung (220) an einer ersten Seite des Gehäuses (100),
wobei der Plattenteil (111) eine Mehrzahl unterer Kühlkanäle (111CH) umfasst, welche sich in einer ersten Richtung erstrecken, wobei die erste Seiten-(112)-Wand einen ersten unteren Rückgewinnungskanal (112H) umfasst, wobei die zweite Seitenwand (113) einen zweiten unteren Rückgewinnungskanal (113CH) umfasst,
**dadurch gekennzeichnet, dass** die untere Zuführrohranordnung (220) mit der Mehrzahl unterer Kühlkanäle (111CH) verbunden ist.

2. Batteriepack (100) nach Anspruch 1, ferner umfassend untere Zuführanschlüsse (210) an der ersten Seite des Gehäuses (110) und verbunden mit der unteren Zuführrohranordnung (220).

3. Batteriepack (100) nach Anspruch 1, ferner umfassend untere Abführanschlüsse (250) an der ersten Seite des Gehäuses (110) und verbunden mit dem ersten und dem zweiten unteren Rückgewinnungskanal (112CH, 113CH).

4. Batteriepack (100) nach Anspruch 1, wobei jede aus der ersten und der zweiten Seitenwand (112, 113) ferner einen Abgabeweg (113VP) umfasst, welcher dazu eingerichtet ist, ein Gas abzugeben, welches von den Batterieanordnungen (120) abgeführt worden ist.

5. Batteriepack (100) nach Anspruch 1, ferner umfassend eine untere Rückgewinnungsrohranordnung (230) an einer zweiten Seite des Gehäuses (100), welche entgegengesetzt zu der ersten Seite ist, wobei die untere Rückgewinnungsrohranordnung (230) dazu eingerichtet ist, die Mehrzahl unterer Kühlkanäle (111CH) mit dem ersten und dem zweiten unteren Rückgewinnungskanal (112CH, 113CH) zu verbinden.

6. Batteriepack (100) nach Anspruch 5, wobei die untere Zuführrohranordnung (220) und die untere Rückgewinnungsrohranordnung (230) die Mehrzahl unterer Kühlkanäle (111CH) miteinander parallel verbinden.

7. Batteriepack (100) nach Anspruch 1, wobei die erste Seitenwand (112) ferner einen ersten oberen Rückgewinnungskanal (112CH') umfasst, welcher den ersten unteren Rückgewinnungskanal (112CH) überlagert, und wobei die zweite Seitenwand (113CH) ferner einen zweiten oberen Rückgewinnungskanal (113CH') umfasst, welcher den zweiten unteren Rückgewinnungskanal (113CH) überlagert.

8. Batteriepack (100) nach Anspruch 7, ferner umfassend eine obere Kühlvorrichtung (140), welche die Batterieanordnungen (120) überlagert und welche eine Mehrzahl oberer Kühlkanäle (140CH) umfasst.

9. Batteriepack (100) nach Anspruch 8, ferner umfassend eine obere Zuführrohranordnung (320) an der ersten Seite des Gehäuses (100) und verbunden mit der Mehrzahl oberer Kühlkanäle (140CH).

10. Batteriepack (100) nach Anspruch 9, wobei die obere Zuführrohranordnung (320) die Mehrzahl oberer Kühlkanäle (140CH) parallel verbindet.

11. Batteriepack (100) nach Anspruch 9, ferner umfassend obere Zuführanschlüsse (310) an der ersten Seite des Gehäuses (100) und verbunden mit der oberen Zuführrohranordnung (320).

12. Batteriepack (100) nach Anspruch 9, ferner umfassend obere Abführanschlüsse (350) an der ersten Seite des Gehäuses (100) und verbunden mit dem ersten und dem zweiten oberen Rückgewinnungskanal (112CH', 113CH').

13. Batteriepack (100) nach Anspruch 8, ferner umfassend eine obere Rückgewinnungsrohranordnung (330), welche dazu eingerichtet ist, die Mehrzahl oberer Kühlkanäle (140CH) mit dem ersten und dem zweiten oberen Rückgewinnungskanal (112CH', 113CH') zu verbinden.

14. Batteriepack (100) nach Anspruch 13, wobei die obere Rückgewinnungsrohranordnung (330) an der zweiten Seite des Gehäuses (100) ist.

## Revendications

1. Bloc-batterie (100) comprenant :
un logement (110) incluant une partie plaque (111) et des première et seconde parois latérales (112, 113) couplées à la partie plaque (111) ;
une pluralité d'ensembles batterie (120) sur le logement (110) ; et
un ensemble tuyau d'alimentation inférieur (220) sur un premier côté du logement (100),
dans lequel la partie plaque (111) inclut une pluralité de canaux de refroidissement inférieurs (111CH) s'étendant dans une première direction, la première paroi latérale (112) inclut un premier canal de récupération inférieur (112H), la seconde paroi latérale (113) inclut un second canal de récupération inférieur (113CH), **caractérisé en ce que** l'ensemble tuyau d'alimentation inférieur (220) est relié à la pluralité de canaux de refroidissement inférieurs (111CH).

2. Bloc-batterie (100) selon la revendication 1, comprenant en outre des orifices d'alimentation inférieurs (210) sur le premier côté du logement (110) et reliés à l'ensemble tuyau d'alimentation inférieur (220).

3. Bloc-batterie (100) selon la revendication 1, comprenant en outre des orifices de décharge inférieurs (250) sur le premier côté du logement (110) et reliés aux premier et second canaux de récupération inférieurs (112CH, 113CH).

4. Bloc-batterie (100) selon la revendication 1, dans lequel chacune des première et seconde parois latérales (112, 113) inclut en outre un trajet d'évacuation (113VP) configuré pour évacuer un gaz déchargé des ensembles batterie (120).

5. Bloc-batterie (100) selon la revendication 1, comprenant en outre un ensemble tuyau de récupération inférieur (230) sur un second côté du logement (100) opposé au premier côté, l'ensemble tuyau de récupération inférieur (230) étant configuré pour relier la pluralité de canaux de refroidissement inférieurs (111CH) aux premier et second canaux de récupération inférieurs (112CH, 113CH).

6. Bloc-batterie (100) selon la revendication 5, dans lequel l'ensemble tuyau d'alimentation inférieur (220) et l'ensemble tuyau de récupération inférieur (230) relient la pluralité de canaux de refroidissement inférieurs (111CH) entre eux en parallèle.

7. Bloc-batterie (100) selon la revendication 1, dans lequel la première paroi latérale (112) inclut en outre un premier canal de récupération supérieur (112CH') superposé au premier canal de récupération inférieur (112CH), et la seconde paroi latérale (113CH) inclut en outre un second canal de récupération supérieur (113CH') superposé au second canal de récupération inférieur (113CH).

8. Bloc-batterie (100) selon la revendication 7, comprenant en outre un dispositif de refroidissement supérieur (140) superposé aux ensembles batterie (120) et incluant une pluralité de canaux de refroidissement supérieurs (140CH).

9. Bloc-batterie (100) selon la revendication 8, comprenant en outre un ensemble tuyau d'alimentation supérieur (320) sur le premier côté du logement (100) et relié à la pluralité de canaux de refroidissement supérieurs (140CH).

10. Bloc-batterie (100) selon la revendication 9, dans lequel l'ensemble tuyau d'alimentation supérieur (320) relie la pluralité de canaux de refroidissement supérieurs (140CH) en parallèle.

11. Bloc-batterie (100) selon la revendication 9, comprenant en outre des orifices d'alimentation supérieurs (310) sur le premier côté du logement (100) et reliés à l'ensemble tuyau d'alimentation supérieur (320).

12. Bloc-batterie (100) selon la revendication 9, comprenant en outre des orifices de décharge supérieurs (350) sur le premier côté du logement (100) et reliés aux premier et second canaux de récupération supérieurs (112CH', 113CH').

13. Bloc-batterie (100) selon la revendication 8, comprenant en outre un ensemble tuyau de récupération supérieur (330) configuré pour relier la pluralité de canaux de refroidissement supérieurs (140CH) aux premier et second canaux de récupération supérieurs (112CH', 113CH').

14. Bloc-batterie (100) selon la revendication 13, dans lequel l'ensemble tuyau de récupération supérieur (330) est sur le second côté du logement (100).
